(19) Europäisches Patentamt
European Patent Office
Office européen des brevets

(11) EP 4 483 727 A1

(12) EUROPEAN PATENT APPLICATION
published in accordance with Art. 153(4) EPC

(43) Date of publication:
**01.01.2025 Bulletin 2025/01**

(21) Application number: **23760110.9**

(22) Date of filing: **24.02.2023**

(51) International Patent Classification (IPC):
***A24D 3/16*** *(2006.01)* ***A24D 1/20*** *(2020.01)*
***A24D 3/14*** *(2006.01)* ***A24D 3/17*** *(2020.01)*

(52) Cooperative Patent Classification (CPC):
**A24D 1/20; A24D 3/14; A24D 3/16; A24D 3/17**

(86) International application number:
**PCT/JP2023/006765**

(87) International publication number:
**WO 2023/163112 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.02.2022 JP 2022027617**

(71) Applicant: **Japan Tobacco Inc.**
**Tokyo 105-6927 (JP)**

(72) Inventor: **MOTODAMARI, Tetsuya**
**Tokyo 130-8603 (JP)**

(74) Representative: **Hoffmann Eitle**
**Patent- und Rechtsanwälte PartmbB**
**Arabellastraße 30**
**81925 München (DE)**

(54) **SHEET FOR FLAVOR INHALATION ARTICLE**

(57) This sheet for a flavor inhalation article includes (A) adsorption particles in the amount of 20 g/m$^2$ or more, (B) pulp, and (C) polyester fibers.

Fig. 6

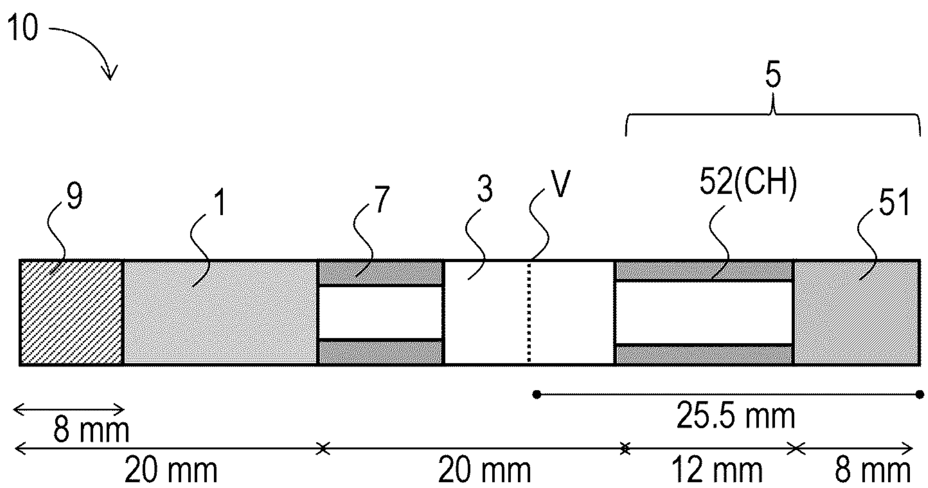


EP 4 483 727 A1

**Description**

TECHNICAL FIELD

The present invention relates to a sheet for a flavor inhalation article.

BACKGROUND ART

Combustible smoking articles in the related art are known to include activated carbon packed in an acetate filter in order to remove components that give undesirable inhaling flavors. For example, PTL 1 discloses a charcoal filter produced by externally adding activated carbon to the surface of activated carbon-containing paper and further folding and packing this paper in a wrapper.

CITATION LIST

PATENT LITERATURE

PTL 1: International Publication No. WO 2011/118042

SUMMARY OF INVENTION

TECHNICAL PROBLEM

The main point of the invention disclosed in PTL 1 is to increase the total amount of activated carbon by internally and externally adding activated carbon although there is a limit to the amount of activated carbon since excessive activated carbon incorporated into paper makes paper brittle. However, external addition of activated carbon requires a process of creping paper or other processes. This process increases the ventilation resistance of the paper when the paper is used as a filter. To solve this issue, the inventors of the present invention have conceived that an ideal sheet for a flavor inhalation article is obtained if more activated carbon is internally added without making the sheet brittle. In light of the above circumstance, an object of the present invention is to provide a sheet for a flavor inhalation article wherein the sheet has good adsorption properties and good handling ability.

SOLUTION TO PROBLEM

The inventors of the present invention have focused on the use of particular fibers to increase the amount of adsorbent particles, completing the present invention. More specifically, the object is achieved by the invention described below.

First Aspect
A sheet for a flavor inhalation article includes:

(A) adsorbent particles in an amount of 20 $g/m^2$ or more;
(B) pulp; and
(C) polyester fibers.

Second Aspect
In the sheet according to the first aspect, the (A) adsorbent particles contain activated carbon.
Third Aspect
In the sheet according to the first or second aspect, the (C) polyester fibers contain a C2-C4 alkylene glycol residue as a diol residue, and a terephthalic acid, isophthalic acid, or phthalic acid residue as a diacid residue.
Fourth Aspect
In the sheet according to the third aspect, a polyester of the (C) polyester fibers contains an ethylene glycol residue as a diol residue and a terephthalic acid residue as a diacid residue.
Fifth Aspect
The sheet according to any one of the first to fourth aspects further includes a binder.
Sixth Aspect
In the sheet according to any one of the first to fifth aspects, the sheet has a tensile strength of 5 N/15mm or more.
Seventh Aspect

A wrapping material includes the sheet according to any one of the first to sixth aspects.

Eighth Aspect

A member for a flavor inhalation article includes the sheet according to any one of the first to sixth aspects.

Ninth Aspect

In the member for a flavor inhalation article according to the eighth aspect, the member is selected from the group consisting of an end member, a flavor generating member containing a flavor source, a support member, a cooling member, and a combination thereof.

Tenth Aspect

A flavor inhalation article includes:

- the sheet according to any one of the first to sixth aspects;
- the wrapping material according to the seventh aspect; or
- the member for a flavor inhalation article according to the eighth or ninth aspect.

## ADVANTAGEOUS EFFECTS OF INVENTION

The present invention can provide a sheet for a flavor inhalation article wherein the sheet has good adsorption properties and good handling ability.

## BRIEF DESCRIPTION OF DRAWINGS

[Fig. 1] Fig. 1 is a view of one aspect of a non-combustion-heating-type flavor inhalation article.
[Fig. 2] Fig. 2 is a view of one aspect of the non-combustion-heating-type flavor inhalation article.
[Fig. 3] Fig. 3 is a view of one aspect of the non-combustion-heating-type flavor inhalation article.
[Fig. 4] Fig. 4 is a view of one aspect of the non-combustion-heating-type flavor inhalation article.
[Fig. 5] Fig. 5 is a view of one aspect of the non-combustion-heating-type flavor inhalation article.
[Fig. 6] Fig. 6 is a view of one aspect of the non-combustion-heating-type flavor inhalation article.
[Fig. 7] Fig. 7 is a view of one aspect of the non-combustion-heating-type flavor inhalation article.
[Fig. 8] Fig. 8 is a view of one aspect of a non-combustion-heating-type flavor inhalation system.
[Fig. 9] Fig. 9 shows the correlation between Ch/PD and the formaldehyde level.
[Fig. 10] Fig. 10 is an electron microscopy image of a sheet for a flavor inhalation article.

## DESCRIPTION OF EMBODIMENTS

In the present disclosure, "X to Y" is inclusive of end values X and Y.

### 1. Sheet for Flavor Inhalation Article

A sheet for a flavor inhalation article according to this embodiment includes (A) adsorbent particles, (B) pulp, and (C) polyester fibers.

#### (1) (A) Adsorbent Particles

The adsorbent can adsorb components in aerosols generated from a flavor inhalation article in one aspect. Examples of the adsorbent include activated carbon, zeolite, activated alumina, and silica gel. From the viewpoint of availability and other reasons, the adsorbent preferably contains activated carbon, and is more preferably composed of activated carbon.

The adsorbent particles may have any particle size. The average particle size of the adsorbent particles is preferably 5 to 150 μm, more preferably 10 to 100 μm. The average particle size is measured by image-based particle size distribution analysis.

The amount of the adsorbent particles in the sheet is expressed in the amount per unit area of the sheet. If the amount per unit area of the sheet is too low, no satisfactory adsorption effect is obtained. From this viewpoint, the amount is 20 g/$m^2$ or more. The lower limit is preferably 40 g/$m^2$ or more. From the viewpoint of sheet handling ability, the upper limit is preferably 80 g/$m^2$ or less, more preferably 60 g/$m^2$ or less. As described above, the adsorbent is preferably activated carbon.

The surface area of activated carbon is preferably 500 to 3000 $m^2$/g, more preferably 700 to 2500 $m^2$/g. The

surface area of the adsorbent, which is a BET specific surface area, is measured by the nitrogen adsorption method.

(2) (B) Pulp

Pulp is an assembly of cellulose fibers extracted by mechanically or chemically treating a plant raw material. The plant raw material is preferably wood.

(3) (C) Polyester Fibers

A polyester constituting the polyester fibers contains a diol residue and a diacid residue. The diol residue preferably contains a C2-C4 alkylene glycol residue, more preferably contains an ethylene glycol residue. The diacid residue preferably contains a terephthalic acid, isophthalic acid, or phthalic acid residue, more preferably contains a terephthalic acid residue. Such a polyester can be represented by the formula described below. In the formula, n represents the number of repetitions, and m represents an integer of 2 to 4. In particular, a polyester containing a C2-C4 alkylene glycol residue or an isophthalic acid or phthalic acid residue does not excessively increase in crystallinity and thus improves adhesion between the polyester fibers and the adsorbent particles.

[Chemical Formula 1]

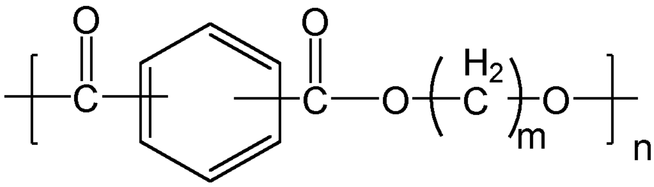

(4) Other Components

The sheet for a flavor inhalation article preferably contains a binder. The binder improves adhesion between the fibers and also improves adhesion between the fibers and the adsorbent. The biner may be a known one. Examples of the binder include polyvinyl alcohol and vinyl acetate.

(5) Physical Properties

The sheet for a flavor inhalation article preferably has the properties described below. The amounts of the components blended may be appropriately adjusted so as to achieve the properties.

Tensile strength (ISO 1924-2): 5 N/15mm or more, preferably 5 to 30 N/15mm, more preferably 10 to 20 N/15mm
Basis weight (ISO 536): 50 to 100 g/m$^2$, more preferably 70 to 90 g/m$^2$
Thickness: 100 to 300 $\mu$m, more preferably 150 to 250 $\mu$m
Iodine adsorption performance (JIS K 1474): 300 to 2000 mg/g, more preferably 500 to 1500 mg/g
Air permeability: 0 to 30000 CU, preferably 0 to 10000 CU, more preferably 0 to 2000 CU

The air permeability (unit: CORESTA Unit (CU)) is the air flow rate (cm$^3$) per minute per cm$^2$ at a differential pressure of 1 kPa. The air permeability can be measured by using a permeability meter PPM 1000M available from Cerulean.

The effective surface area of the adsorbent per cm$^2$ of the sheet for a flavor inhalation article is preferably 5,000 to 70,000 m$^2$/m$^2$. The effective surface area is the total area of the adsorbent exposed on the sheet surface. This numerical range is based on the following.

In one aspect, the average area of the adsorbent buried in the sheet may be 30% to 50% of the surface area of one particle of the adsorbent. In other words, the average exposed area of the adsorbent is 50% to 70%. If the surface area of the adsorbent is 1000 m$^2$/g, and the amount of the adsorbent in the sheet is 10 g/m$^2$, the effective surface area when 50% of the area is exposed on the average is calculated as described below.

$$10\ \text{g/m}^2 \times 1000\ \text{m}^2/\text{g} \times 50\% = 5000\ \text{m}^2/\text{m}^2$$

If the surface area of the adsorbent is 2000 m$^2$/g, and the above amount is 50 g/m$^2$, the effective surface area

when 70% of the area is exposed on the average is calculated as described below.

$$50\ g/m^2 \times 2000\ m^2/g \times 70\% = 70{,}000\ m^2/m^2$$

(6) Surface Treatment of Sheet for Flavor Inhalation Article

In one aspect, the sheet for a flavor inhalation article has no surface treatment. In another aspect, the sheet for a flavor inhalation article has been surface-treated. The surface treatment may be a known treatment, preferably creping. The creping refers to forming crepe-like wrinkles in the sheet by using a doctor on a roll or other members. The crepe depth is preferably 0.1 to 0.5 $\mu$m.

2. Method for Producing Sheet for Flavor Inhalation Article

The sheet for a flavor inhalation article can be produced by a known method using the components described above. For example, a slurry of a mixture of the above components may be prepared and subjected to the papermaking process to produce a papermaking sheet. The slurry may be cast on a substrate to produce a cast sheet. The slurry may be spread under pressure by using a roller and then dried to produce a laminate sheet. The slurry may be extruded and then dried to produce an extruded sheet.

3. Usage

(1) Wrapping Material

The sheet for a flavor inhalation article is useful as a wrapping material used for a flavor inhalation article. Examples of the wrapping material include a wrapper wrapped around one member, and a tipping paper wrapped around two or more members.

(2) Member for Flavor Inhalation Article

The sheet for a flavor inhalation article is useful as a member for a flavor inhalation article. Examples of the member for a flavor inhalation article include an end member, a flavor generating member containing a flavor source, a support member, a cooling member, and a filter.

1) End Member

The end member is a member disposed in an end of the flavor inhalation article opposite to the mouthpiece end. The sheet for a flavor inhalation article can be used as a filler or wrapper in the end member. The end member may remove moisture during storage of the flavor inhalation article. For example, the end member can be produced by a production method including a step of packing non-woven fabric or cellulose acetate fiber, which is a filler, in the sheet for a flavor inhalation article, which is a wrapper.

2) Flavor Generating Member Containing Flavor Source

The flavor generating member containing a flavor source is a member for generating a flavor. Examples of the flavor generating member include a tobacco member. The sheet for a flavor inhalation article can be used as a wrapper for the flavor generating member. The flavor generating member including the sheet for a flavor inhalation article has an effect of being able to remove moisture during storage of the flavor inhalation article. The sheet for a flavor inhalation article can also be used as part of the filler in the flavor generating member. The flavor generating member can remove moisture or components that give undesirable flavors during storage of the flavor inhalation article or during flavor inhalation. For example, the flavor generating member containing a flavor source can be produced by a production method including a step of packing a tobacco material, which is a filler, in the sheet for a flavor inhalation article, which is a wrapper. Alternatively, the flavor generating member containing a flavor source can be produced by a production method including a step of mixing, with a tobacco material, sheet shreds or strand shreds obtained by shredding the sheet for a flavor inhalation article to prepare mixture shreds, and a step of packing the mixture shreds in a wrapper.

3) Support Member

The support member is a member for increasing the strength of the flavor inhalation article. Examples of the support member include a center hole filter. The sheet for a flavor inhalation article can be used as a material of the center hole filter. The support member may remove moisture or components that give undesirable flavors during storage of the flavor inhalation article or during flavor inhalation. For example, the support member can be produced by a production method including a step of forming a hollow tube by using the sheet for a flavor inhalation article, and packing the hollow tube, which is a filler, in the sheet for a flavor inhalation article, which is a wrapper. The hollow support member, when having a long length, can also serve as the cooling member described below.

4) Cooling Member

The cooling member is a member that cools the heated flavors. The sheet for a flavor inhalation article is useful as a material of the cooling member. The cooling member may remove moisture or components that give undesirable flavors during storage of the flavor inhalation article or during flavor inhalation. For example, a tube formed by using the sheet for a flavor inhalation article can be used as the cooling member. The cooling member may have a ventilation as needed. As described above, the cooling member can also serve as the support member.

5) Filter

The filter removes unnecessary components when aerosols pass through the filter. The sheet for a flavor inhalation article is particularly useful as a sheet for the filter. The filter is preferably produced by a method including a step 1 of preparing a sheet for a flavor inhalation article, and a step 2 of preparing a filter including a tubular wrapper and the sheet disposed in the wrapper.

The step 1 is as described above. The step 2 can be carried out by a known method. For example, the filter can be produced by packing the folded sheet for a flavor inhalation article or cuts of the sheet for a flavor inhalation article in a tubular wrapper. Alternatively, the filter can be produced by folding the sheet for a flavor inhalation article into a pillar shape and wrapping the folded sheet in a wrapper. The step 2 may be preceded by a step of subjecting the sheet for a flavor inhalation article to the surface treatment.

4. Non-combustion-Heating-Type Flavor Inhalation Article

Flavor inhalation articles are roughly classified into combustion-type flavor inhalation articles (cigarettes) and non-combustion-heating-type flavor inhalation articles. A non-combustion-heating-type flavor inhalation article will be described below as an example. Fig. 1 illustrates one aspect of the non-combustion-heating-type flavor inhalation article. In the figure, reference sign 10 denotes a non-combustion-heating-type flavor inhalation article, reference sign 1 denotes a tobacco member, reference sign 3 denotes a cooling member, reference sign 5 denotes a mouthpiece, reference sign 51 denotes a first filter, reference sign 52 denotes a second filter, and reference sign V denotes a ventilation. The non-combustion-heating-type flavor inhalation article may have any size. For example, the non-combustion-heating-type flavor inhalation article may have a length of about 50 to 80 mm and a cross-sectional diameter of about 5.5 to 7.5 mm. Since the sheet for a flavor inhalation article is particularly useful as a sheet for the filter as described above, an aspect where the second filter includes the sheet will be described below as an example.

(1) Tobacco Member

The tobacco member is a substantially columnar member for generating inhaling flavor components contained in tobacco raw materials. The tobacco member includes a tobacco material and wrapping paper (wrapper) wrapped around the tobacco material. The tobacco material packed in the wrapping paper may have any shape. Examples of the shape of the tobacco material include a tobacco sheet, tobacco sheet shreds with widths of 0.8 to 1.2 mm, and shreds with widths of 0.8 to 1.2 mm. The tobacco sheet is not limited and can be produced by a known method. For example, the tobacco sheet may be, for example, a papermaking sheet, a cast sheet produced by casting the slurry on a substrate, a laminate sheet produced by spreading the slurry under pressure by using a roller and then drying the slurry, or an extruded sheet produced by extruding the slurry and then drying the slurry. The tobacco sheet may be gathered, folded, or spirally wound without being shredded, and packed in wrapping paper to form a tobacco member. The tobacco sheet may be cut into strips, and the strips may be packed concentrically or such that the longitudinal direction of the strips is parallel to the longitudinal direction of the tobacco member.

The packing density of the tobacco material is typically, but not necessarily, 200 $mg/cm^3$ or more, preferably 250 $mg/cm^3$ or more in order to ensure the properties of the non-combustion-heating-type flavor inhalation article and impart a

good smoke taste. The upper limit of the packing density is typically 800 mg/cm$^3$ or less, preferably 600 mg/cm$^3$ or less. The length of the tobacco member 1 is preferably, but not necessarily, 10 to 25 mm. The diameter of the tobacco member 1 is preferably 6 to 8 mm.

The tobacco material may generate steam when being heated. The heating temperature is not limited, but it is about 30 to 400°C. To promote generation of aerosols, a polyol, such as glycerine, propylene glycol, or 1,3-butanediol, may be added as an aerosol source to the tobacco material. The amount of the aerosol source added relative to the dry weight of the tobacco material is preferably 5 to 50 wt%, more preferably 10 to 30 wt%. In addition, known flavoring agents or other substances may be added to the tobacco material. As described above, the sheet for a flavor inhalation article can also be used as a wrapper for the tobacco member.

(2) Cooling Member

The cooling member 3 is connected to the downstream side of the tobacco member 1. The downstream refers to the direction toward the mouthpiece end. The cooling member 3 is a member for, for example, cooling inhaling flavor components and steam generated in the tobacco member 1 to promote aerosolization. The cooling member may be a hollow paper tube. The paper tube is preferably made of cardboard, which is more rigid than wrapping paper or tipping paper. As described above, the paper tube may be made of the sheet for a flavor inhalation article. The paper tube may have a ventilation V (perforation). A plurality of the ventilations is preferably provided along the circumference of the paper tube. The cooling member may be packed with a gathered sheet in order to improve the heat exchange efficiency. The cooling member may have any size and preferably has a length of 10 to 25 mm and a diameter of 5.5 to 7.5 mm.

(3) Mouthpiece

The mouthpiece is a member constituting the mouthpiece end. In one aspect, a mouthpiece 5 includes a first filter 51 and a second filter 52. The first filter 51 may be usually a filter used in the art and may be a solid acetate filter. The second filter 52 may include a wrapper and a sheet for a flavor inhalation article packed in the wrapper. The length of the second filter 52 is not limited and may be 5 to 20 mm, preferably about 10 to 15 mm.

Other embodiments will be illustrated in Figs. 2 to 7.

Fig. 2 illustrates an aspect where the wrapper W (wrapping paper) of the tobacco member 1 is composed of the sheet for a flavor inhalation article, the second filter 52 is a hollow filter, and the first filter 51 is a solid acetate filter.

Fig. 3 illustrates an aspect where the second filter 52 is a filter packed with the sheet for a flavor inhalation article, and the first filter 51 is a paper filter.

Fig. 4 illustrates an aspect where the second filter 52 is a filter packed with the sheet for a flavor inhalation article, and the first filter 51 is a paper filter enclosing a friable capsule C.

Fig. 5 illustrates an aspect where the second filter 52 is a filter packed with the sheet for a flavor inhalation article, and the first filter 51 is a paper filter having a hollow between the first filter 51 and the second filter 52 and enclosing a friable capsule C in the hollow.

Fig. 6 illustrates an aspect where an end member 9 is disposed on the upstream side of the tobacco member 1, and a support member 7 is disposed on the downstream side of the tobacco member 1 in the aspect of Fig. 1.

Fig. 7 illustrates an aspect where the support member 7 and the cooling member 3 in the aspect of Fig. 6 are replaced by a support member 7 having a ventilation.

The sizes in these figures are illustrative and appropriately adjusted.

5. Non-combustion-Heating-Type Flavor Inhalation System

A combination of a non-combustion-heating-type flavor inhalation article and a heating unit is also referred to as a non-combustion-heating-type flavor inhalation system. Fig. 8 illustrates an aspect of the system. In the figure, reference sign 100 denotes a non-combustion-heating-type flavor inhalation system, reference sign 10 denotes a non-combustion-heating-type flavor inhalation article, and reference sign 30 denotes a heating unit including a heater. The heating unit includes, for example, a heater, a housing, and a power source.

The heater preferably electrically heats the tobacco member 1. The heater may be of a type that heats the tobacco member 1 from the outer circumference of the tobacco member 1, or a type that is inserted into the tobacco member 1 and heats the tobacco member 1 from inside.

The non-combustion-heating-type flavor inhalation system may be an induction heating (IH) system. In this aspect, the heating unit 30 is composed of an induction coil. The heating unit is usually disposed around the tobacco member 1. The tobacco member 1 may include a susceptor that is heated by the magnetic field generated by energizing the induction coil.

Embodiments will be described below.

First Aspect
A sheet for a flavor inhalation article includes:

(A) adsorbent particles in an amount of 20 g/$m^2$ or more;
(B) pulp; and
(C) polyester fibers.

Second Aspect
In the sheet according to the first aspect, the (A) adsorbent particles contain activated carbon.
Third Aspect
In the sheet according to the first or second aspect, the (C) polyester fibers contain a C2-C4 alkylene glycol residue as a diol residue, and a terephthalic acid, isophthalic acid, or phthalic acid residue as a diacid residue.
Fourth Aspect
In the sheet according to the third aspect, a polyester of the (C) polyester fibers contains an ethylene glycol residue as a diol residue and a terephthalic acid residue as a diacid residue.
Fifth Aspect
The sheet according to any one of the first to fourth aspects further includes a binder.
Sixth Aspect
In the sheet according to any one of the first to fifth aspects, the sheet has a tensile strength of 5 N/15mm or more.
Seventh Aspect
A wrapping material includes the sheet according to any one of the first to sixth aspects.
Eighth Aspect
A member for a flavor inhalation article includes the sheet according to any one of the first to sixth aspects.
Ninth Aspect
In the member for a flavor inhalation article according to the eighth aspect, the member is selected from the group consisting of an end member, a flavor generating member containing a flavor source, a support member, a cooling member, and a combination thereof.
Tenth Aspect
A flavor inhalation article includes:

the sheet according to any one of the first to sixth aspects;
the wrapping material according to the seventh aspect; or
the member for a flavor inhalation article according to the eighth or ninth aspect.

## EXAMPLES

[Example AI]

A sheet containing moderately activated carbon serving as adsorbent particles, pulp, and polyester fibers was prepared and evaluated. The evaluation method is described below. The amount of activated carbon and the physical properties of the sheet are shown in Table 1. Next, a filter was produced by folding and packing the sheet in a wrapper in accordance with a conventional method. The ridgelines formed by folding the sheet were substantially parallel to the longitudinal direction of the filter. The physical properties of the filter are also shown in Table 1. The sheet had good mechanical properties and good handling ability. In addition, the sheet provides a filter having good adsorption properties because the sheet contains a large amount of activated carbon.

[Example A2]

A sheet and a filter were produced and evaluated by the same methods as in Example A1 except that highly activated carbon was used as adsorbent particles. The sheet had good mechanical properties and good handling ability. In addition, the sheet provides a filter having good adsorption properties because the sheet contains a large amount of activated carbon.
Fig. 10 shows the SEM images of the sheets produced in Examples A1 and A2. After vapor deposition of platinum on the sheets, the sheets were observed at × 800 and × 10,000 at an application voltage of 10 kV. The figure indicates that desired sheets are obtained.

[Table 1]

| | | "Substrate A" of Comparative Example 1 in PTL 1 | Example A1 | Example A2 |
|---|---|---|---|---|
| Sheet | Activated carbon amount ($g/m^2$) | 10.7 | 50 | 50 |
| | Basis weight ($g/m^2$) | 42.9 (32.2)* | 74.5 | 82.7 |
| | Thickness | 0.16 mm | 218um | 232um |
| | Tensile strength (N/15mm) | | 10 | 18 |
| | Air permeability C.U. | | 1500 | 1100 |
| Filter | Activated carbon amount | 24 mg/10mm | 51 mg/12mm | 57 mg/12mm |
| | Ventilation resistance | 21 $mmH_2O$/10mm | 8.2 $mmH_2O$/12mm | 4 to 7.8 $mmH_2O$/12mm |
| * Pulp net weight | | | | |

Table 1 also shows the physical properties of the "substrate A" of Comparative Example 1 of PTL 1 and the filter produced from the substrate A. The substrate A is paper with internally added activated carbon and free of polyester fibers.

[Examples B1 to B4]

Sheets containing pulp, polyester fibers, activated carbon, and a binder were prepared. Next, second filters shown in Fig. 1 were produced by folding and packing the sheets in a wrapper in accordance with a conventional method. The ridgelines formed by folding the sheets were substantially parallel to the longitudinal direction of the filters. The ventilation resistance of the filters was measured by using a filter quality analyzer (product name: SODIMAX, available from SODIM). Specifically, samples were covered with air impermeable rubber from their side surfaces so as to prevent air from flowing in from the side surfaces, and a differential pressure ($mmH_2O$) between both end surfaces of each sample during inhalation from one end at a flow rate of 17.5 $cm^3$/sec was measured as a ventilation resistance. The physical properties of the filters are shown in Table 2.

The non-combustion-heating-type inhalation article shown in Fig. 1 was produced by using the filters as the second filter. The structure and the size are described below.

Tobacco member/paper tube/second filter/first filter = 20/20/12/8 (mm)

The tobacco member-side end of the non-combustion-heating-type flavor inhalation article was inserted into a heating device shown in Fig. 8. The heater temperature was set at 295°C, and the tobacco member was heated by the heater. A Cambridge filter (CM-133 available from Borgwaldt KC Inc.) and an impinger containing a solution of DNPH (2,4-dinitrophenylhydrazine) were placed adjacent to the mouthpiece end of the article, and the article was subjected to a smoking test with a smoking machine. Specifically, a sample was subjected to automatic smoking by using an automatic smoking machine (LM-1 available from Borgwaldt KC Inc.) under the condition of 10 puffs at a smoking capacity of 27.5 ml/sec, a smoking time of 2 sec/puff, and a smoking frequency of 2 puff/min.

Nicotine and glycerine were analyzed by the following method. The Cambridge filter after the smoking test was shaked in 10 mL of methanol (available from Wako Pure Chemical Industries, Ltd., Guaranteed Reagent) to obtain an analysis sample. The obtained analysis sample (1 μL) was collected with a micro-syringe and analyzed by gas chromatography-mass spectrometry (GC-MSD available from Agilent, GC: 7890A, MS: 5975C). The results are shown in Table 2.

Of carbonyl components, formaldehyde, acetaldehyde, and acrolein were analyzed by the method described below. The Cambridge filter after the smoking test was immersed in an impinger collection liquid and shaked, and the solids were then filtered out with a membrane filter. In addition, a predetermined amount of filtrate was added to a Trizma base solution and shaked to terminate the derivatization reaction. The solution was filtered through the membrane filter again and then subjected to HPLC-DAD to analyze carbonyl components. For the method for analyzing carbonyl components, reference was made to the disclosure in WO 2004/026054 and CORESTA Recommended Method No. 96 - Determination of Formaldehyde and Acetaldehyde in E-Vapour Product Aerosol February 2021. The results are shown in Table 3. The relationship between Ch/PD and the formaldehyde level is shown in Fig. 9.

[Comparative Examples B1 to B2]

A center hole filter and a paper filter were prepared. The physical properties of the filters are shown in Table 2. The center hole filter and the paper filter were used instead of the second filter 52. Otherwise, the same methods as in Example B1 were used to prepare non-combustion-heating-type flavor inhalation articles and quantitively analyze the particulate matter in the tobacco smoke. The results are shown in Table 3.

[Table 2]

| | Second Filter | Ventilation Resistance ($mmH_2O$) | Activated Carbon Weight (mg) | Ch/PD ($mg/mmH_2O$) |
|---|---|---|---|---|
| Comparative Example B1 | center hole filter | 0 | 0 | 0 |
| Comparative Example B2 | paper filter | 4 | 0 | 0 |
| Example B1 | HAC sheet-packed filter | 4 | 57 | 14.3 |
| Example B2 | HAC sheet-packed filter | 5 | 57 | 11.4 |
| Example B3 | HAC sheet-packed filter | 7.8 | 57 | 7.31 |
| Example B4 | AC sheet-packed filter | 8.2 | 51 | 6.21 |

AC sheet: activated carbon content: 50 $g/m^2$, iodine adsorption capacity:70 to 1000 mg/g, thickness: 140 $\mu$m
HAC sheet: activated carbon content: 50 $g/m^2$, iodine adsorption capacity: 1400 mg/g, thickness: 220 $\mu$m

[Table 3]

| | Formaldehyde ($\mu$g/product) | Acetaldehyde ($\mu$g/product) | Acrolein ($\mu$g/product) | Nicotine (mg/product) | Glycerine (mg/product) |
|---|---|---|---|---|---|
| Comparative Example B1 | 2.9 | 95 | 2.3 | 1.4 | 7.6 |
| Comparative Example B2 | 2.6 | 96 | 2.1 | 1.3 | 7.8 |
| Example B1 | 1.5 | 70 | <1.4 | 1.1 | 7.0 |
| Example B2 | 1.5 | 68 | <1.4 | - | - |
| Example B3 | 1.3 | 78 | <1.4 | 1.0 | 6.7 |
| Example B4 | 1.4 | 82 | <1.4 | 0.7 | 5.0 |

It is clear that the filters produced in Examples B are effective in removing components that have an undesirable effect on inhaling flavors, particularly formaldehyde, acetaldehyde, and acrolein, which are difficult to remove with filters in the related art.

REFERENCE SIGNS LIST

| | |
|---|---|
| 10 | non-combustion-heating-type flavor inhalation article |
| 1 | tobacco member |
| 3 | cooling member |
| 5 | mouthpiece |
| 51 | first filter |
| 52 | second filter |
| 7 | support member |
| 9 | end member |
| V | ventilation |
| W | wrapper |
| C | capsule |
| 100 | non-combustion-heating-type flavor inhalation system |

30 heating unit including heater

## Claims

1. A sheet for a flavor inhalation article, the sheet comprising:

   (A) adsorbent particles in an amount of 20 g/$m^2$ or more;
   (B) pulp; and
   (C) polyester fibers.

2. The sheet according to claim 1, wherein the (A) adsorbent particles contain activated carbon.

3. The sheet according to claim 1 or 2, wherein the (C) polyester fibers contain a C2-C4 alkylene glycol residue as a diol residue, and a terephthalic acid, isophthalic acid, or phthalic acid residue as a diacid residue.

4. The sheet according to claim 3, wherein a polyester of the (C) polyester fibers contains an ethylene glycol residue as a diol residue and a terephthalic acid residue as a diacid residue.

5. The sheet according to any one of claims 1 to 4, further comprising a binder.

6. The sheet according to any one of claims 1 to 5, wherein the sheet has a tensile strength of 5 N/15mm or more.

7. A wrapping material comprising the sheet according to any one of claims 1 to 6.

8. A member for a flavor inhalation article, the member comprising the sheet according to any one of claims 1 to 6.

9. The member for a flavor inhalation article according to claim 8, wherein the member is selected from the group consisting of an end member, a flavor generating member containing a flavor source, a support member, a cooling member, and a combination thereof.

10. A flavor inhalation article comprising:

    the sheet according to any one of claims 1 to 6;
    the wrapping material according to claim 7; or
    the member for a flavor inhalation article according to claim 8 or 9.

Fig. 1

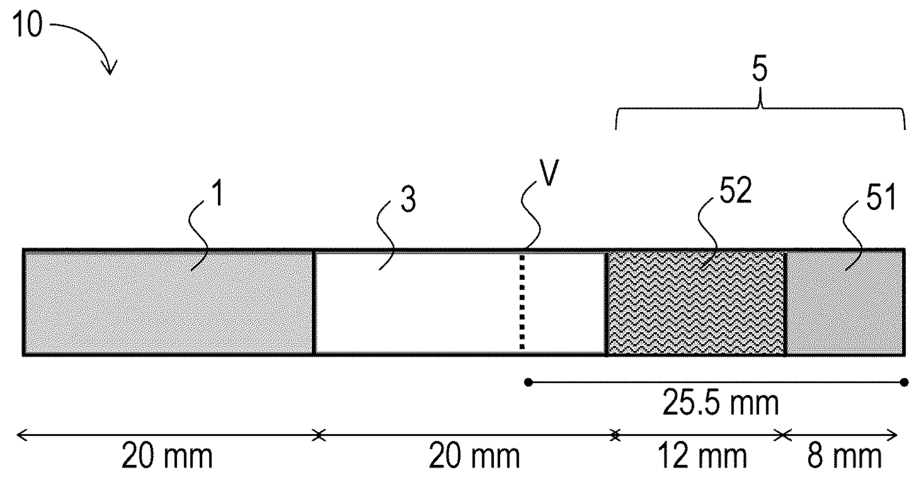


Fig. 2

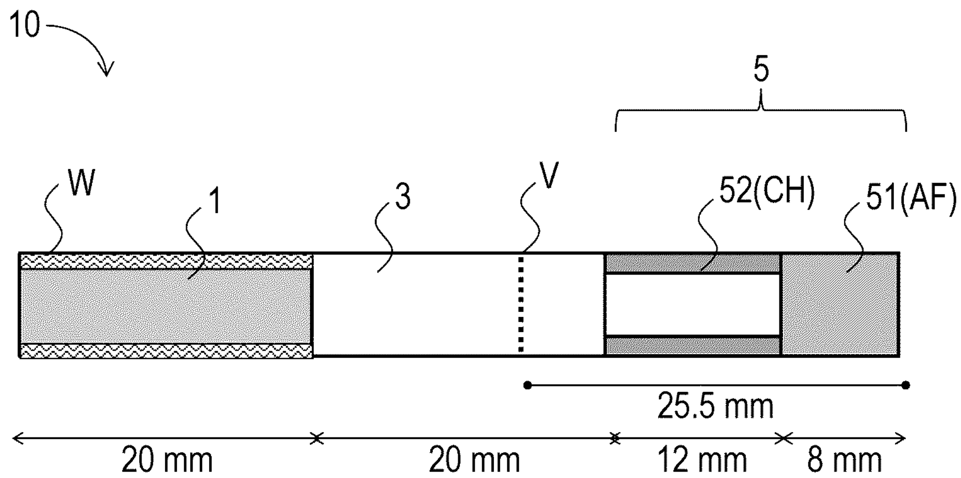


Fig. 3

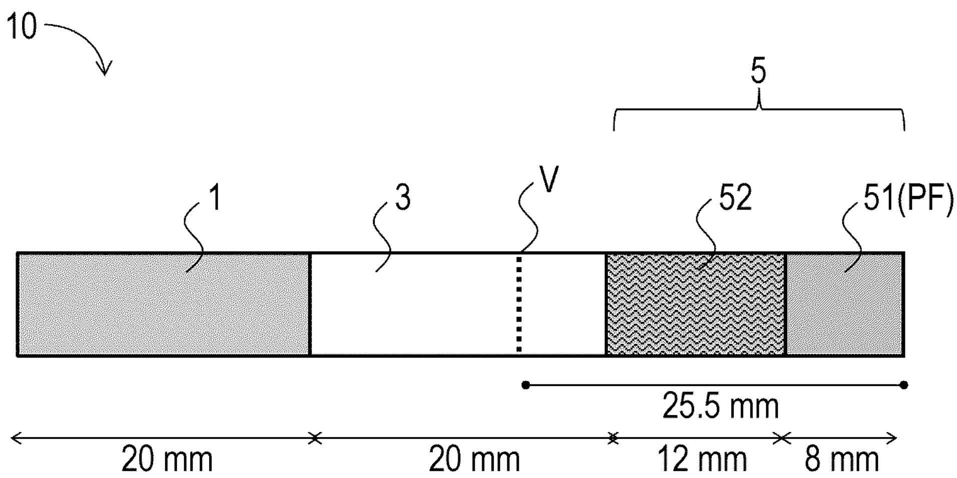

Fig. 4

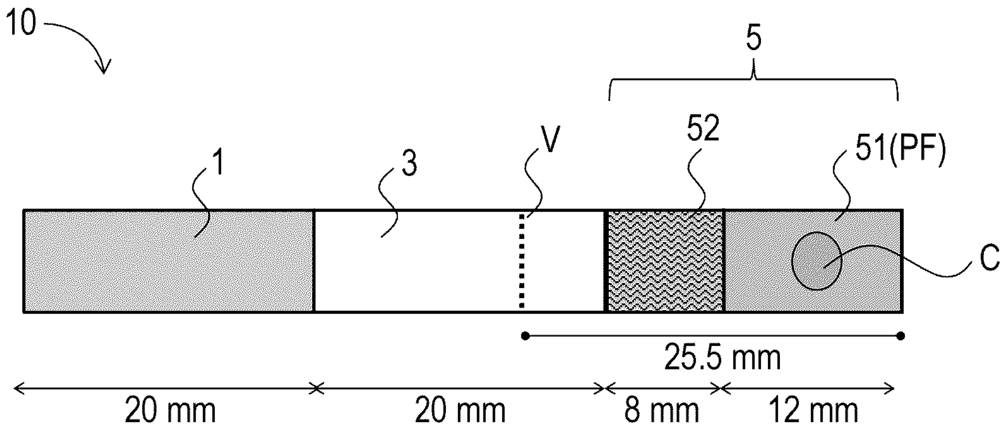


Fig. 5

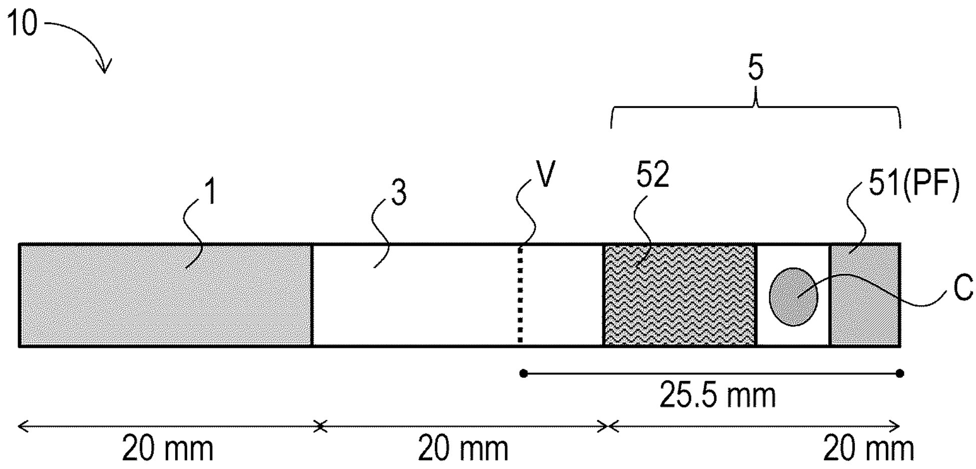


Fig. 6

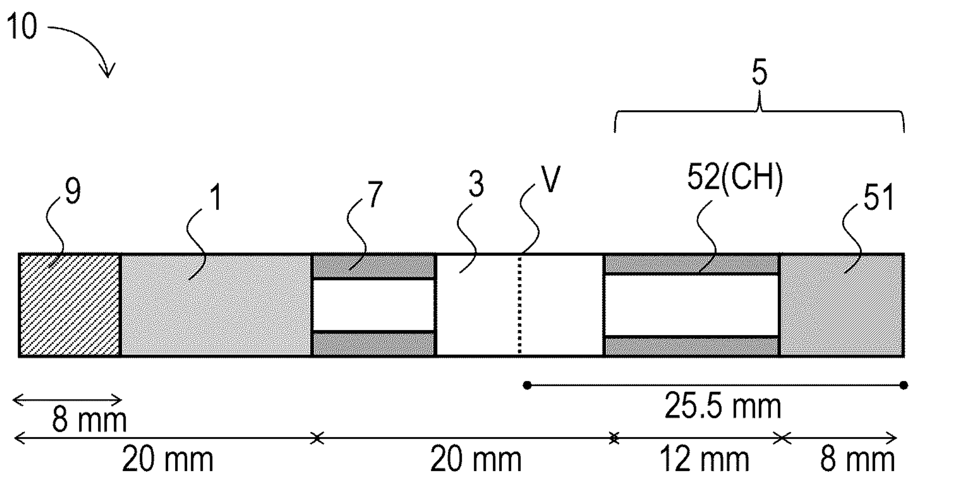

Fig. 7

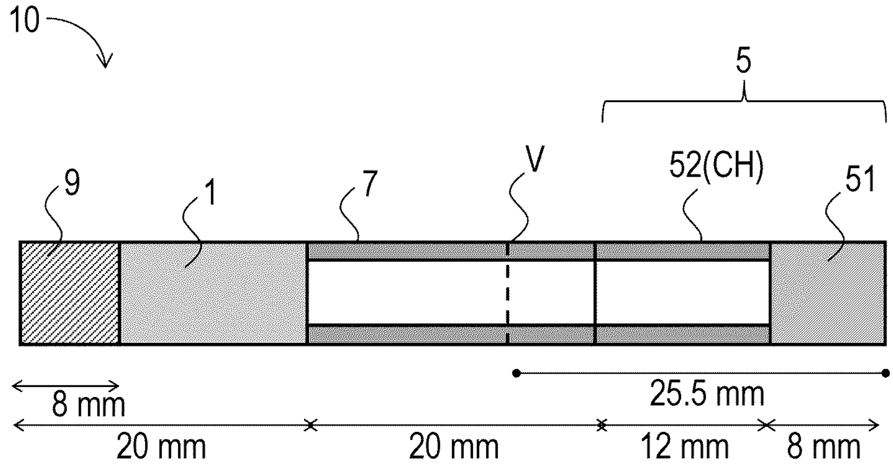


Fig. 8

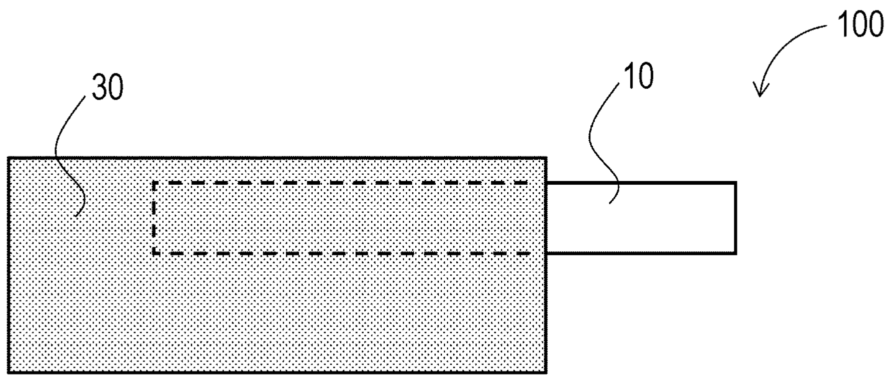


Fig. 9

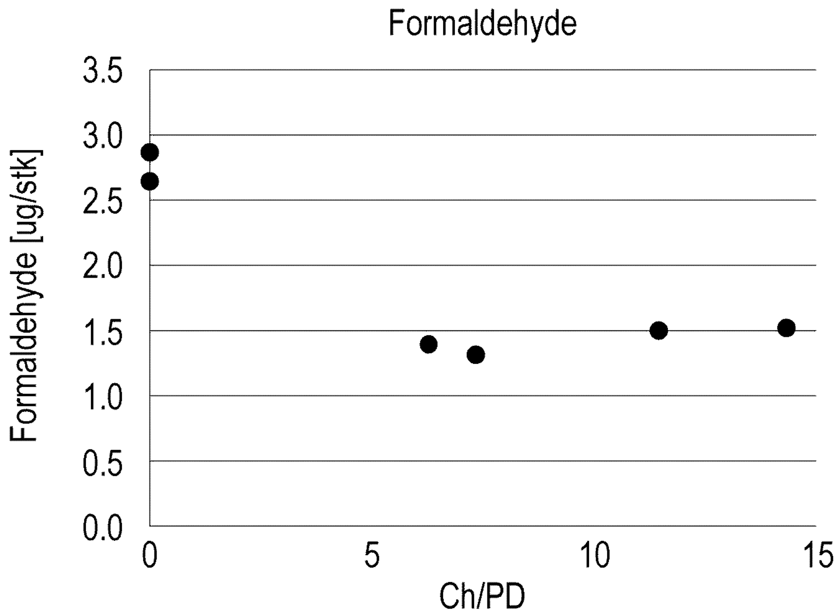

Fig. 10

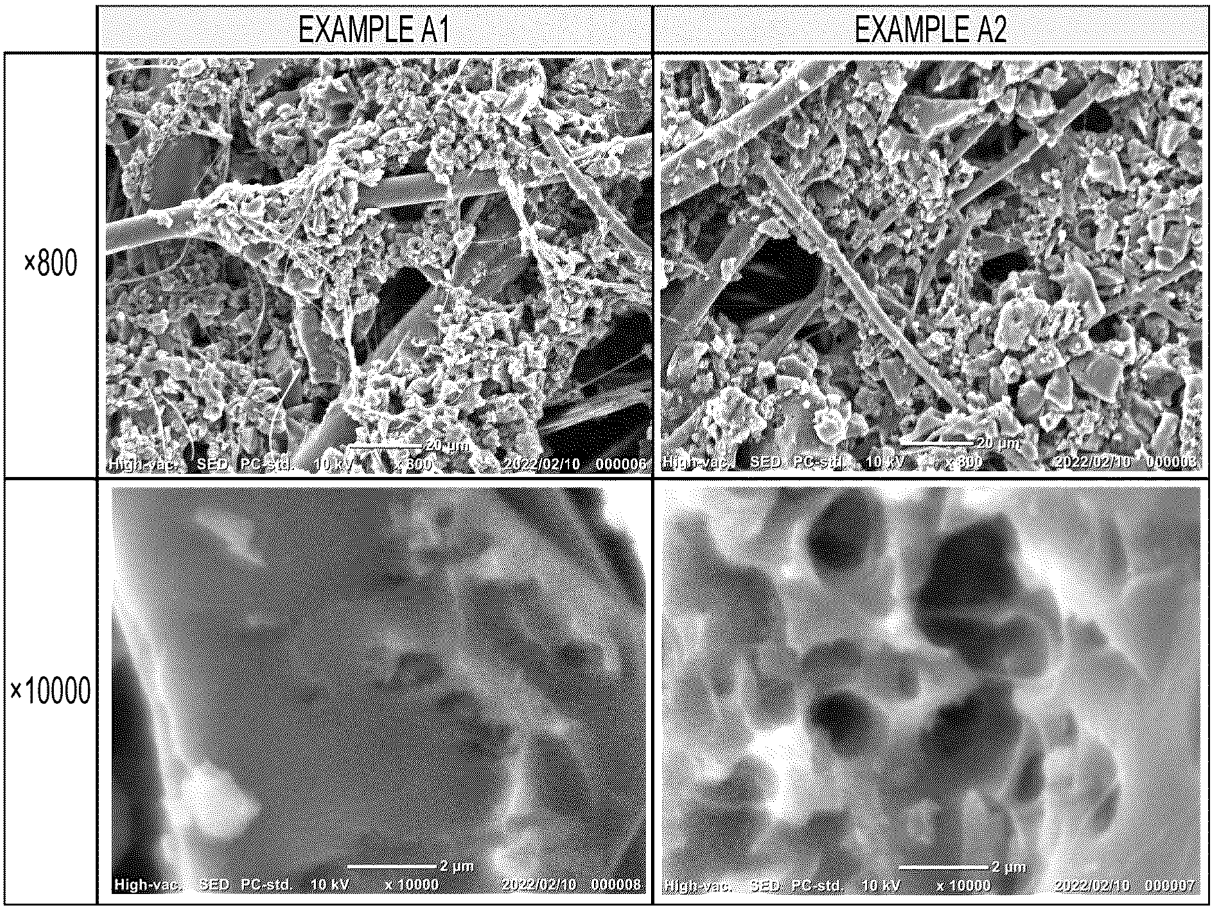
EXAMPLE A1
EXAMPLE A2
×800
×10000
20 µm
High-vac. SED PC-std. 10 kV x 800 2022/02/10 000006
High-vac. SED PC-std. 10 kV x 800 2022/02/10 000003
2 µm
High-vac. SED PC-std. 10 kV x 10000 2022/02/10 000008
High-vac. SED PC-std. 10 kV x 10000 2022/02/10 000007

## INTERNATIONAL SEARCH REPORT

International application No.
**PCT/JP2023/006765**

**A. CLASSIFICATION OF SUBJECT MATTER**

***A24D 3/16***(2006.01)i; ***A24D 1/20***(2020.01)i; ***A24D 3/14***(2006.01)i; ***A24D 3/17***(2020.01)i
FI: A24D3/16; A24D3/14; A24D3/17; A24D1/20

According to International Patent Classification (IPC) or to both national classification and IPC

**B. FIELDS SEARCHED**

Minimum documentation searched (classification system followed by classification symbols)

A24D1/16-3/18; A24F40/00-47/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2014-136178 A (KURARAY CHEMICAL CO LTD) 28 July 2014 (2014-07-28) claim 1, paragraphs [0001]-[0002], [0038]-[0046] | 1-10 |
| Y | JP 2021-159005 A (TOA INDUSTRY CO., LTD.) 11 October 2021 (2021-10-11) paragraphs [0008], [0013], [0057], fig. 1 | 1-10 |
| Y | JP 2009-73962 A (TOYO BOSEKI) 09 April 2009 (2009-04-09) paragraphs [0010]-[0011] | 3-10 |
| Y | WO 2020/153465 A1 (JAPAN TOBACCO INC) 30 July 2020 (2020-07-30) paragraphs [0034]-[0035], [0039] | 6-10 |
| Y | JP 2017-127310 A (PHILIP MORRIS PRODUCTS SA) 27 July 2017 (2017-07-27) paragraphs [0001], [0030] | 7 |
| A | JP 11-100792 A (UNITIKA LTD) 13 April 1999 (1999-04-13) paragraphs [0001], [0010]-[0020], [0035]-[0038], [0054] | 1-10 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 March 2023** | **04 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/006765**

| Patent document cited in search report | Publication date (day/month/year) | Patent family member(s) | Publication date (day/month/year) |
|---|---|---|---|
| JP 2014-136178 A | 28 July 2014 | (Family: none) | |
| JP 2021-159005 A | 11 October 2021 | WO 2021/199713 A1 | |
| JP 2009-73962 A | 09 April 2009 | (Family: none) | |
| WO 2020/153465 A1 | 30 July 2020 | WO 2020/152827 A1<br>TW 202027627 A<br>TW 202038764 A | |
| JP 2017-127310 A | 27 July 2017 | US 2015/0027476 A1<br>paragraphs [0001], [0031]<br>WO 2012/140217 A1<br>EP 2510814 A1<br>EP 2696710 A1<br>AU 2012241806 A1<br>CA 2829875 A1<br>CN 103476279 A<br>KR 10-2014-0009392 A<br>RU 2013150794 A<br>AU 2016202775 A1<br>KR 10-2019-0078658 A<br>BR 112013026040 A2<br>JP 2014-510542 A | |
| JP 11-100792 A | 13 April 1999 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011118042 A
- WO 2004026054 A